# EUROPÄISCHE PATENTANMELDUNG

(11) **EP 2 754 929 A1**
(43) Veröffentlichungstag der Anmeldung: **16.07.2014**
(21) Anmeldenummer: 13005764.9
(22) Anmeldetag: 11.12.2013
(51) Int. Cl.: F16J 15/32, F16J 15/56

(54) **Dichtungsanordung und deren Verwendung**

(30) Priorität: 15.01.2013 DE 102013000514
(71) Anmelder: Carl Freudenberg KG, 69469 Weinheim (DE)
(72) Erfinder: Nahrwold, Olaf, 67071 Ludwigshafen (DE); Jäck, Thomas, 64658 Fürth (DE); Clemens, Markus, 64385 Reichelsheim (DE); Jakob, Ernst, 64668 Rimbach (DE)

(57) **Zusammenfassung**

Dichtungsanordnung, umfassend eine Doppeldichtung (1) zur Abdichtung von zwei gegeneinander abzudichtenden, jeweils mit einem abzudichtenden Medium (2, 3) gefüllten Räumen (4, 5), wobei die Doppeldichtung (1) zwei Dichtringe (6, 7) umfasst, die stirnseitig beiderseits der Doppeldichtung (1) angeordnet sind, wobei jeder Dichtring (6, 7) zumindest eine dynamisch beanspruchte Dichtlippe (8, 9) aufweist, wobei die einander axial am nächsten benachbart zueinander angeordneten Dichtlippen (8, 9) von erstem Dichtring (6) und zweitem Dichtring (7) mit einem axialen Abstand (10) beabstandet zueinander angeordnet sind und wobei die Dichtlippen (6, 7) eine abzudichtende Oberfläche (11) eines mit einem Hub (12) translatorisch hin und her bewegbaren ersten Maschinenelements (13) dichtend berühren. Der axiale Abstand (10) zwischen den einander axial am nächsten benachbart zueinander angeordneten Dichtlippen (8, 9) von erstem Dichtring (6) und zweitem Dichtring (7) ist größer als der Hub (12) des ersten Maschinenelements (13).

## Beschreibung

### Technisches Gebiet

Die Erfindung betrifft eine Dichtungsanordnung, umfassend eine Doppeldichtung zur Abdichtung von zwei gegeneinander abzudichtenden, jeweils mit einem abzudichtenden Medium gefüllten Räumen, wobei die Doppeldichtung zwei Dichtringe umfasst, die stirnseitig beiderseits der Doppeldichtung angeordnet sind, wobei jeder Dichtring zumindest eine dynamisch beanspruchte Dichtlippe aufweist, wobei die einander axial am nächsten benachbart zueinander angeordneten Dichtlippen von erstem Dichtring und zweitem Dichtring mit einem axialen Abstand beabstandet zueinander angeordnet sind und wobei die Dichtlippen eine abzudichtende Oberfläche eines mit einem Hub translatorisch hin und her bewegbaren ersten Maschinenelements dichtend berühren.

### Stand der Technik

Eine solche Dichtungsanordnung ist aus der EP 2 067 996 A1 bekannt. Die vorbekannte Dichtungsanordnung gelangt in einer Kraftstoffkolbenpumpe zur Anwendung. Die Doppeldichtung ist in axialer Richtung nur sehr kurz ausgebildet, wobei der Hub der abzudichtenden Kolbenstange größer ist, als der axiale Abstand zwischen den Dichtlippen von erstem Dichtring und zweitem Dichtring.

Bei der dynamischen Abdichtung der Kolbenstange durch die Dichtlippen wird immer eine geringe Menge des abzudichtenden Mediums unter der entsprechenden Dichtlippe hindurch gefördert. Diese geringe Menge an abzudichtendem Medium wird für die Schmierung der Dichtlippen auf der Kolbenstange benötigt, um einen unerwünscht hohen Verschleiß der Dichtlippen zu vermeiden und möglichst gleichbleibend gute Gebrauchseigenschaften während einer langen Gebrauchsdauer sicher zu stellen.

Durch den nur sehr kurzen axialen Abstand zwischen den Dichtlippen sowie den vergleichsweise größeren Hub der Kolbenstange, findet während der bestimmungsgemäßen Verwendung der Dichtungsanordnung eine unerwünschte Vermischung der gegeneinander abzudichtenden Medien in den jeweils abzudichtenden Räumen statt. Diese unerwünschte Vermischung der abzudichtenden Medien ist darauf zurück zu führen, dass die abzudichtende Oberfläche der Kolbenstange die abzudichtenden Medien, die jeweils zur Schmierung der entsprechenden Dichtlippe genutzt werden, durch den im Vergleich zum axialen Abstand größeren Hub an der jeweils anderen Dichtlippe vorbei in den jeweils anderen abzudichtenden Raum schleppt.

Dies ist insbesondere dann sehr nachteilig, wenn es sich um eine Dichtungsanordnung in einer Kraftstoffpumpe handelt und bei den gegeneinander abzudichtenden Medien um Motoröl und Kraftstoff.

Wird zum Beispiel Kraftstoff in das Motoröl verschleppt, verdünnt sich dadurch das Motoröl. Schmierfilmabrisse in den Motorlagern, daraus resultierend höhere Reibung und ein Ausfall des Motors können die Folge sein.

Wird umgekehrt Motoröl in den Kraftstoff verschleppt, kann das Schäden am Einspritzsystem zur Folge haben. An den Einspritzdüsen kann es zu einer sogenannten Verkohlung kommen, wodurch der Wirkungsgrad des Einspritzsystems verringert wird. Auch ein Ausfall einer oder mehrerer Einspritzdüsen kann die Folge sein.

### Darstellung der Erfindung

Der Erfindung liegt die Aufgabe zugrunde, eine Dichtungsanordnung der vorbekannten Art derart weiter zu entwickeln, dass eine Vermischung der gegeneinander abzudichtenden Medien sicher verhindert wird und dass die Dichtringe dennoch ausreichend gut geschmiert werden.

Diese Aufgabe wird erfindungsgemäß mit den Merkmalen von Anspruch 1 gelöst. Auf vorteilhafte Ausgestaltungen nehmen die auf Anspruch 1 rückbezogenen Ansprüche Bezug.

Zur Lösung der Aufgabe ist es vorgesehen, dass der axiale Abstand zwischen den einander axial am nächsten benachbart zueinander angeordneten Dichtlippen von erstem Dichtring und zweitem Dichtring größer als der Hub des ersten Maschinenelements ist.

Durch eine solche Ausgestaltung wird verhindert, dass abzudichtendes Medium, das zur Schmierung der entsprechenden Dichtlippe dient, durch die translatorische Hin- und Herbewegung des ersten Maschinenelements an der Dichtlippe des jeweils anderen Dichtrings vorbei in den jeweils anderen abzudichtenden Raum eindringt. Bevor das auf der abzudichtenden Oberfläche des abzudichtenden ersten Maschinenelements befindliche, abzudichtende Medium die jeweils andere Dichtlippe erreicht, ändert sich die Bewegungsrichtung des ersten Maschinenelements in die entgegengesetzte Richtung. Eine gegenseitige Vermischung der abzudichtenden Medien innerhalb der beiden gegeneinander abzudichtenden Räume ist dadurch sicher ausgeschlossen.

Nach einer vorteilhaften Ausgestaltung kann es vorgesehen sein, dass das Verhältnis aus axialem Abstand und Hub zumindest 1,1 beträgt. Abhängig vom jeweiligen Benetzungsverhalten der beiden abzudichtenden Medien kann das Verhältnis aus axialem Abstand und Hub größer gewählt werden und zum Beispiel 2 betragen.

Eine gute Benetzung wird erreicht, wenn das Verhältnis aus axialem Abstand und Hub relativ größer ausgelegt wird. Dabei ist jedoch zu beachten, dass durch ein größeres Verhältnis auch mehr Bauraum benötigt wird. Hier gilt es, einen vernünftigen Kompromiss aus möglichst großem Verhältnis und dennoch kompaktem Bauraum zu finden.

Bei einem guten Benetzungverhalten beginnt das abzudichtende Medium am abzudichtenden Maschinenelement "hoch zu kriechen". Das Benetzung Verhalten ist Temperatur abhängig.

Eine schlechtere Benetzung wird demgegenüber dann erreicht, wenn das Verhältnis aus axialem Abstand und Hub relativ kleiner ausgelegt wird.

Nach einer ersten Ausgestaltung kann es vorgesehen sein, dass die Dichtringe der Doppeldichtung einstückig ineinander übergehend ausgebildet sind. Die Doppeldichtung weist dadurch einen besonders teilearmen Aufbau auf und ist einfach und kostengünstig herstellbar.

Nach einer anderen Ausgestaltung kann es vorgesehen sein, dass die Doppeldichtung ein axial zwischen den Dichtringen angeordnetes, separat erzeugtes und hohlzylinderförmig ausgebildetes Distanzstück umfasst. Hierbei ist von Vorteil, dass das Distanzstück zwischen den Dichtringen aus einem einfachen, kostengünstigen Werkstoff bestehen kann. Bevorzugt kann das Distanzstück aus einem polymeren Werkstoff bestehen. Ein Polyamid-Werkstoff kann beispielsweise zur Anwendung gelangen.

Gummielastische Dichtungswerkstoffe gelangen bei einer derartigen Ausgestaltung also nur zur Herstellung der Dichtringe zur Anwendung.

Das Distanzstück kann die abzudichtende Oberfläche anliegend berühren und eine erste Führungsfläche aufweisen, die eine dem Distanzstück radial zugewandte zweite Führungsfläche eines zweiten Maschinenelements, das dem ersten Maschinenelement mit radialem Abstand benachbart zugeordnet ist, anliegend berührt. Das erste Maschinenelement, das beispielsweise eine Kolbenstange sein kann, wird in einem solchen Fall durch das Distanzstück im zweiten Maschinenelement, das beispielsweise ein Gehäuse sein kann, geführt.

Das zweite Maschinenelement kann beispielsweise durch ein Gehäuse gebildet sein, das das erste Maschinenelement außenumfangsseitig umschließt. Durch die vergleichsweise große axiale Länge der Doppeldichtung ist es wichtig, dass das erste Maschinenelement, bezogen auf die Doppeldichtung, gut geführt ist. Würde das erste Maschinenelement - bezogen auf die Doppeldichtung - verkippen, hätte das nachteilige Auswirkungen auf die Funktion und die Lebendauer der Doppeldichtung.

Das Distanzstück kann bevorzugt aus Werkstoffen bestehen, die für Linearführungen Verwendung finden. Solche Werkstoffe können zum Beispiel polymere Werkstoffe wie PTFE sein. Das Distanzstück kann auch aus Sinterbronze oder keramischen Werkstoffen hergestellt sein.

Das Distanzstück kann einen in axialer Richtung elastisch nachgiebig ausgebildeten Teilbereich aufweisen. Üblicherweise ist die Doppeldichtung in der Dichtungsanordnung in axialer Richtung spielfrei eingebaut. Während der bestimmungsgemäßen Verwendung der Dichtungsanordnung kann es zu einer Erwärmung der Doppeldichtung kommen und daraus resultierend zu einer Wärmeausdehnung in axialer Richtung. Um eine temperaturbedingt unerwünscht große Verspannung der Doppeldichtung in axialer Richtung zu vermeiden, ist der in axialer Richtung elastisch nachgiebig ausgebildete Teilbereich vorgesehen. In dem Maße, in dem sich die Doppeldichtung durch die Erwärmung in axialer Richtung ausdehnen würde, wird das Distanzstück in axialer Richtung elastisch nachgiebig gestaucht. Die Doppeldichtung ist dadurch während der gesamten Gebrauchsdauer der Dichtungsanordnung stets spielfrei in ihrem Einbauraum angeordnet.

Das Distanzstück und die Dichtringe können kraft- und/oder formschlüssig miteinander verbunden sein. Alternativ kann das Distanzstück mit den Dichtringen stoffschlüssig verbunden sein. Es ist von Vorteil, wenn die Dichtringe durch ihre Verbindung mit dem Distanzstück gemeinsam eine vormontierbare Einheit bilden. Die Anzahl der losen Teile wird dadurch reduziert und die Montage der Dichtungsanordnung vereinfacht.

Auch eine Kombination der genannten Fügeverfahren ist in Abhängigkeit vom jeweiligen Anwendungsfall möglich.

Eine formschlüssige Verbindung des Distanzstücks mit den beiden Dichtringen hat den Vorteil, dass das Distanzstück und die Dichtringe zerstörungsfrei lösbar sind. Ein sortenreines Recycling der Dichtungsanordnung im Anschluss an ihre Verwendung ist dadurch erleichtert.

Die Dichtringe können als Gleichteile ausgebildet sein, wobei die Dichtringe spiegelbildlich zu einer axial mittig der Doppeldichtung angeordneten, gedachten Radialebene ausgebildet sind. Die Herstellung der Doppeldichtung und deren Montage sind dadurch besonders einfach.

Nach einer anderen Ausgestaltung kann es vorgesehen sein, dass die Dichtringe voneinander abweichend ausgebildet sind und/oder aus voneinander abweichenden Werkstoffen bestehen. Die Dichtringe können dadurch besonders gut an den jeweiligen Anwendungsfall, insbesondere an das jeweils abzudichtende Medium, angepasst werden. Zur Abdichtung von Motoröl kann der Dichtring zum Beispiel bevorzugt aus Fluor-Kautschuk FKM, Acrylat-Kautschuk ACM, Acrylnitril-Butadien-Kautschuk NBR oder einem Hydrierten Acrylnitril-Butadien-Kautschuk HNBR bestehen. Diese Werkstoffe haben den Vorteil, dass sie bei Kontakt mit den abzudichtenden Medien keine oder eine nur geringe Quellung aufweisen.

Kraftstoffe können beispielsweise bevorzugt durch Dichtringe aus Polytetrafluorethylen PTFE, PTFE-Compounds, also PTFE mit Füllstoffen, wie zum Beispiel Bronze, oder Polyetherketon PEEK abgedichtet werden. Auch bei diesen Werkstoffen ist von Vorteil, dass sie bei Kontakt mit den abzudichtenden Medien keine oder eine nur geringe Quellung aufweisen.

Durch die passende Werkstoffauswahl für den jeweiligen Anwendungsfall können die jeweils preisgünstigsten der geeigneten Werkstoffe ausgewählt werden. Teure PTFE-Werkstoffe für eine einfache Ölabdichtung brauchen nicht verwendet zu werden; die Dichtungsanordnung ist dadurch kostengünstig herstellbar.

Die Doppeldichtung kann mindestens eine statisch beanspruchte Dichtung aufweisen, die das zweite Maschinenelement dichtend berührt. Durch die statisch beanspruchte Dichtung können Koaxialfehler zwischen erstem und zweitem Maschinenelement ausgeglichen werden. Die Fehlstellung der beiden Maschinenelemente relativ zueinander wird dann nicht auf die Dichtlippen der Dichtringe übertragen. Unerwünscht hohe mechanische Belastungen der Dichtlippen werden dadurch vermieden.

Die statische Dichtung kann durch einen O-Ring gebildet sein. Der O-Ring gleicht durch sein weiches und elastisches Verhalten evtl. bestehende Koaxialfehler zwischen den beiden Maschinenelementen aus und dichtet auf der statischen Seite der Dichtringe ab.

Um ein Verkippen der Doppeldichtung zu vermeiden, können auch zwei oder mehrere O-Ringe zur Anwendung gelangen. O-Ringe sind in vielen Größen kostengünstig verfügbar. Jedoch besteht generell auch die Möglichkeit, Dichtringe mit anderen Querschnitten als statische Dichtung zu verwenden, zum Beispiel X-Ringe.

Der O-Ring kann in einer radial in Richtung des zweiten Maschinenelements offenen Ausnehmung der Doppeldichtung angeordnet sein. Dabei besteht die Möglichkeit, dass die offene Ausnehmung in einer Doppeldichtung angeordnet ist, bei der Dichtringe einstückig ineinander übergehend ausgebildet oder durch ein Distanzstück miteinander verbunden sind.

Jeder Dichtring kann auf der dem zweiten Maschinenelement radial zugewandten Seite eine als wulstförmige Verdickung ausgebildete, statisch beanspruchte Dichtung aufweisen. Solche wulstförmige Verdickungen können auch in Kombination mit dem zuvor beschriebenen O-Ring zu Anwendung kommen.

Die Dichtringe der Dichtungsanordnung können, im Schnitt betrachtet, zum Beispiel im Wesentlichen C-förmig, in axialer Richtung offen, ausgebildet sein. Stirnseitig im Bereich der freien Schenkel können die dynamisch beanspruchten Dichtlippen und die wulstförmigen Verdickungen angeordnet sein, wobei durch die C-förmige Gestalt der Dichtringe die Dichtlippen und die Verdickungen unter elastischer Vorspannung am jeweils abzudichtenden Maschinenelement anliegen. Zur Erhöhung der radialen Anpresskraft der Dichtlippen und der Verdickungen am jeweiligen Maschinenelement kann zum Beispiel eine C-förmige Spreizfeder im Hohlraum der Dichtringe angeordnet sein, die die freien Schenkel radial in Richtung der angrenzenden, abzudichtenden Maschinenelemente vorspannt.

Das erste Maschinenelement kann durch eine Kolbenstange und das zweite Maschinenelement durch ein das erste Maschinenelement mit radialem Abstand umschließendes Gehäuse gebildet sein. Die dynamisch beanspruchten Dichtlippen sind demnach dann radial innen dichtend, die wulstförmigen Verdickungen radial außen dichtend ausgebildet.

Die zuvor beschriebene Dichtungsanordnung kann in einer Kraftstoffkolbenpumpe Verwendung finden, wobei einer der abzudichtenden Räume mit Kraftstoff und der andere abzudichtende Raum mit Öl gefüllt ist. Die Kraftstoffkolbenpumpe kann zusammen mit einer Verbrennungskraftmaschine in einem Kraftfahrzeug zur Anwendung gelangen.

### Kurzbeschreibung der Zeichnung

Acht Ausführungsbeispiele der beanspruchten Dichtungsanordnung sind in den Figuren 1 bis 8 schematisch dargestellt und werden im Folgenden näher beschrieben.

Diese zeigen:
- Fig. 1: ein erstes Ausführungsbeispiel einer Dichtungsanordnung, in der das Verhältnis aus axialem Abstand und Hub zeichnerisch dargestellt ist, wobei die Dichtringe der Doppeldichtung einstückig ineinander übergehend ausgebildet sind,
- Fig. 2: ein zweites Ausführungsbeispiel der Dichtungsanordnung, bei der die Doppeldichtung radial außenumfangsseitig von einer statischen Dichtung in Form eines O-Rings umschlossen ist,
- Fig. 3: ein drittes Ausführungsbeispiel, ähnlich dem Ausführungsbeispiel aus Fig. 1, wobei zwischen den Dichtringen der Doppeldichtung ein Distanzstück angeordnet ist,
- Fig. 4: ein viertes Ausführungsbeispiel, ähnlich dem Ausführungsbeispiel aus Fig. 2, wobei das Distanzstück als Führung des ersten Maschinenelements im zweiten Maschinenelement ausgebildet ist,
- Fig. 5: ein fünftes Ausführungsbeispiel, bei dem die Doppeldichtung Dichtringe aufweist, die voneinander abweichend ausgebildet sind,
- Fig. 6: ein sechstes Ausführungsbeispiel, bei dem die Dichtringe der Doppeldichtung als Gleichteile ausgebildet und formschlüssig mit dem Distanzstück verbunden sind,
- Fig. 7: ein siebtes Ausführungsbeispiel, ähnlich dem Ausführungsbeispiel aus Fig. 3, wobei das Distanzstück einen in axialer Richtung elastisch nachgiebig ausgebildeten Teilbereich aufweist und
- Fig. 8: ein achtes Ausführungsbeispiel, ähnlich dem zweiten Ausführungsbeispiel aus Fig. 2, wobei der O-Ring das Distanzstück als statische Dichtung außenumfangsseitig umschließt.

### Ausführung der Erfindung

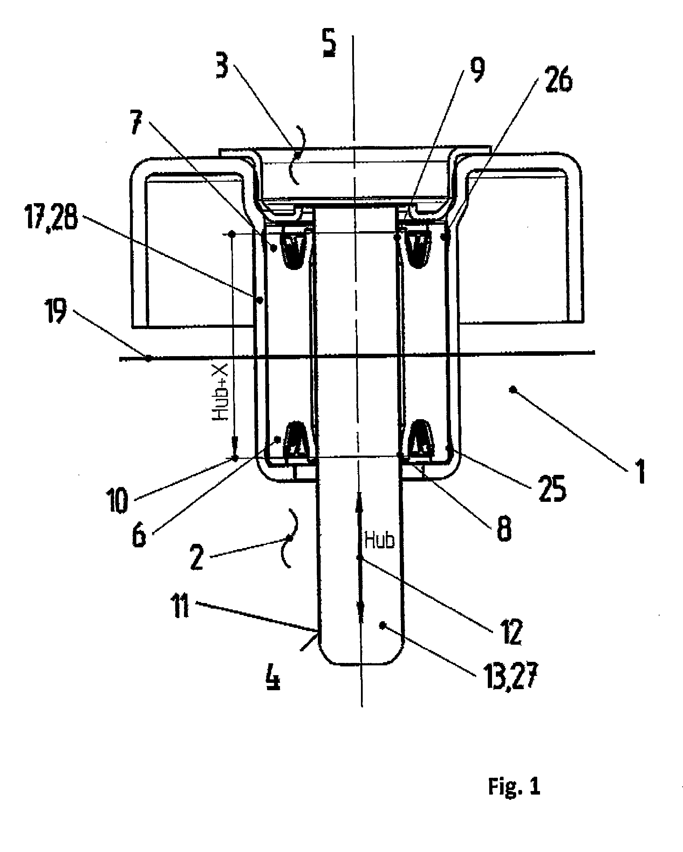

In den Fig. 1 bis 8 sind acht Ausführungsbeispiele einer Dichtungsanordnung gezeigt, die eine Doppeldichtung 1 zur Abdichtung von zwei gegeneinander abzudichtenden Räumen 4, 5 umfasst. Die Dichtungsanordnung gelangt in einer Kraftstoffkolbenpumpe zur Anwendung. Das erste Maschinenelement 13 ist als Kolbenstange 27, das zweite Maschinenelement 17 als Gehäuse 28 ausgebildet. Der eine der abzudichtenden Räume 4 ist mit Kraftstoff, der andere der abzudichtenden Räume 5 mit Motoröl gefüllt. Bei dem Kraftstoff kann es sich zum Beispiel um Benzin oder Diesel handeln.

Die Doppeldichtung 1 umfasst die beiden Dichtringe 6, 7, die in axialer Richtung gegensinnig zueinander angeordnet sind, um die Räume 4, 5 abzudichten. Die Dichtringe 6, 7 weisen die dynamisch beanspruchten Dichtlippen 8, 9 auf, die die abzudichtende Oberfläche 11 des ersten Maschinenelements 13, das durch die Kolbenstange 27 gebildet ist, außenumfangsseitig dichtend umschließen.

Die Dichtlippe 8 des ersten Dichtrings 6 ist der Dichtlippe 9 des zweiten Dichtrings 7 mit einem axialen Abstand 10 benachbart zugeordnet, der größer ist als der Hub 12 des translatorisch hin und her bewegbaren Maschinenelements 13.

Gelangen pro Dichtring 6, 7 mehr als jeweils eine dynamisch beanspruchte Dichtlippe 8, 9 zur Anwendung, ist der axiale Abstand 10 der Abstand zwischen den Dichtlippen von erstem Dichtring 6 und zweitem Dichtring 7, die einander in axialer Richtung am nächsten benachbart zueinander angeordnet sind.

In den hier gezeigten Ausführungsbeispielen beträgt das Verhältnis aus axialem Abstand 10 und Hub 12 1,3.

Dadurch, dass der axiale Abstand 10 zwischen den Dichtlippen 8, 9 größer als der Hub 12 des ersten Maschinenelements 13 ist, wird verhindert, dass abzudichtendes Medium 2, 3, das zur Schmierung der Dichtlippe 8, 9 benötigt wird, aus dem abzudichtenden Raum 4, 5, mittels der abzudichtenden Oberfläche 11 an der Dichtlippe 9, 8 vorbei in den abzudichtenden Raum 5, 4 geschleppt wird und sich dort mit dem abzudichtenden Medium 3, 2 vermischt. Das gilt auch umgekehrt. Auch das abzudichtende Medium 3, 2 aus dem abzudichtenden Raum 5, 4 wird während der bestimmungsgemäßen Verwendung der Dichtungsanordnung nicht unter der Dichtlippe 8, 9 hindurch in den abzudichtenden Raum 4, 5 geschleppt und dort mit dem abzudichtenden Medium 2, 3 vermischt.

In Fig. 1 ist ein erstes Ausführungsbeispiel der Dichtungsanordnung gezeigt. Die Dichtringe 6, 7 der Doppeldichtung 1 sind einstückig ineinander übergehend ausgebildet, wobei die dynamische Abdichtung durch die Dichtlippen 8, 9 an der Oberfläche 11 des ersten Maschinenelements 13 und die statische Abdichtung am zweiten Maschinenelement 17 durch die wulstförmigen Verdickungen 25, 26 erfolgt. Die Dichtringe 6, 7 sind einstückig ineinander übergehend und materialeinheitlich ausgebildet.

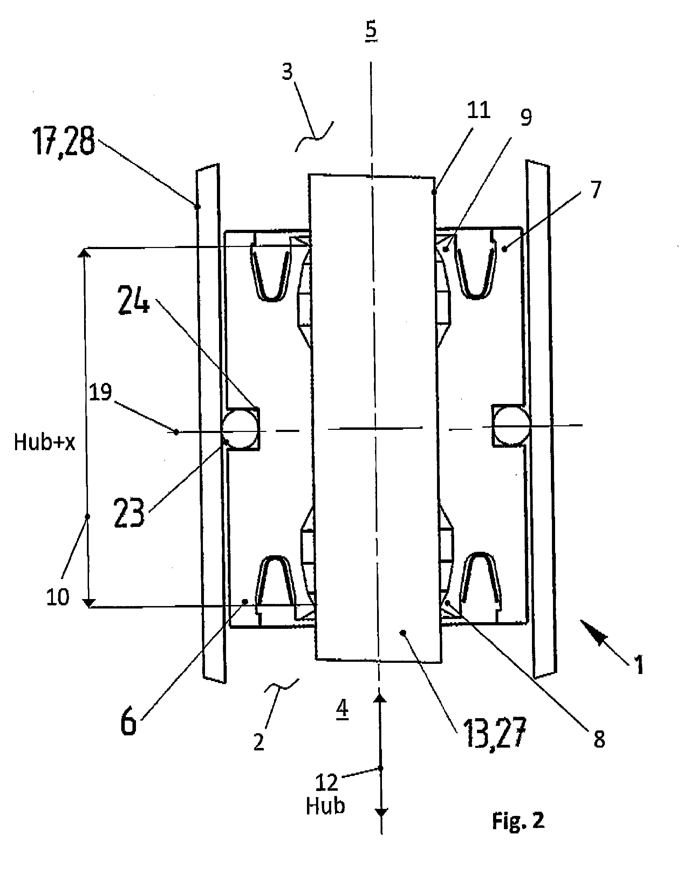

In Fig. 2 ist ein zweites Ausführungsbeispiel einer Dichtungsanordnung gezeigt, das sich vom ersten Ausführungsbeispiel aus Fig. 1 im Wesentlichen dadurch unterscheidet, dass in axialer Richtung zwischen den Dichtringen 6, 7 der Doppeldichtung 1 eine radial in Richtung des zweiten Maschinenelements 17 offene Ausnehmung 24 vorgesehen ist, in der ein O-Ring 23 angeordnet ist. Durch den elastisch nachgiebigen O-Ring 23 werden mögliche Koaxialfehler zwischen den gegeneinander abzudichtenden Maschinenelementen 13, 17 ausgeglichen.

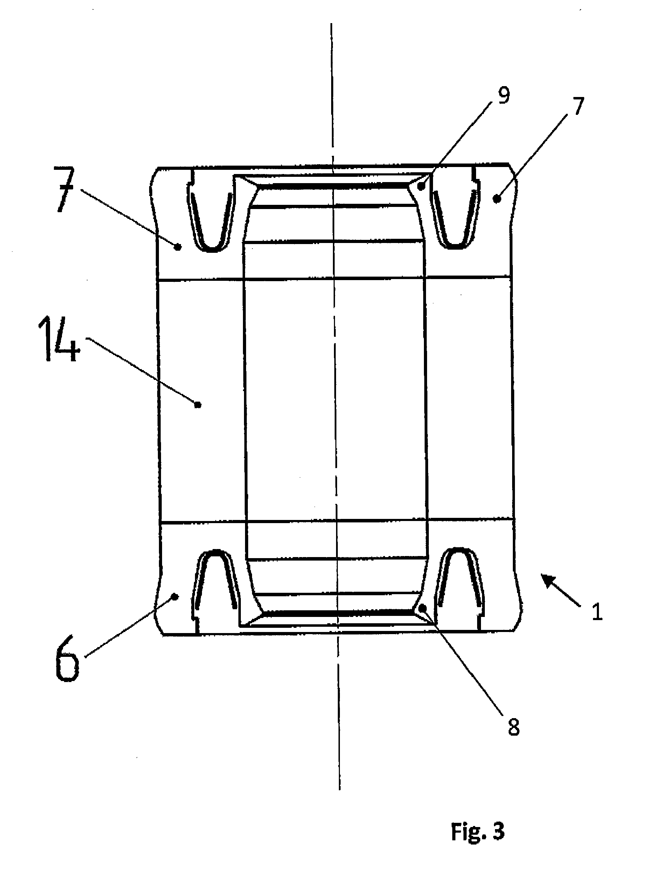

In Fig. 3 ist ein drittes Ausführungsbeispiel gezeigt, ähnlich dem Ausführungsbeispiel aus Fig. 1, wobei die Dichtringe 6, 7 durch das separat erzeugte und hohlzylinderförmig ausgebildete Distanzstück 14, das hier aus einem polymeren Werkstoff besteht, miteinander verbunden sind.

Wie auch bei den anderen Ausführungsbeispielen, die mehrteilig ausgebildet sind, können die Dichtringe 6, 7 und das Distanzstück 14 auf unterschiedliche Weise verbunden sein und eine vormontierbare Einheit bilden. Die Verbindung kann kraft- und/oder formschlüssig erfolgen oder stoffschlüssig, wobei auch Kombinationen möglich sind.

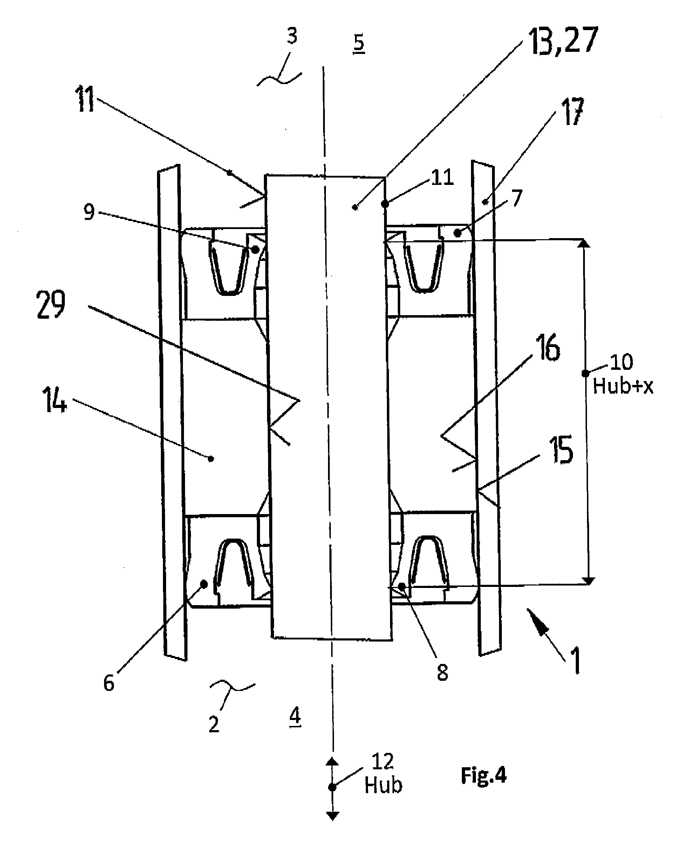

In Fig. 4 ist ein viertes Ausführungsbeispiel gezeigt, bei dem das Distanzstück 14 als Führungshülse ausgebildet ist. Das Distanzstück 14 umschließt die Oberfläche 11 des ersten Maschinenelements 13 außenumfangsseitig anliegend und wird vom zweiten Maschinenelement 17 außenumfangsseitig anliegend umschlossen. Die Doppeldichtung ist sowohl dem ersten Maschinenelement 13 als auch dem zweiten Maschinenelement 17 dadurch konzentrisch zugeordnet; einer Verkippung der Doppeldichtung 1 wird somit zuverlässig vorgebeugt.

Das Distanzstück 14 hat eine erste Führungsfläche 15, die eine zweite Führungsfläche 16 des zweiten Maschinenelements 17 anliegend berührt. Radial innen weist das Distanzstück 14 eine weitere Führungsfläche 29 auf, die die abzudichtende Oberfläche 11 des ersten Maschinenelements 13 anliegend umschließt.

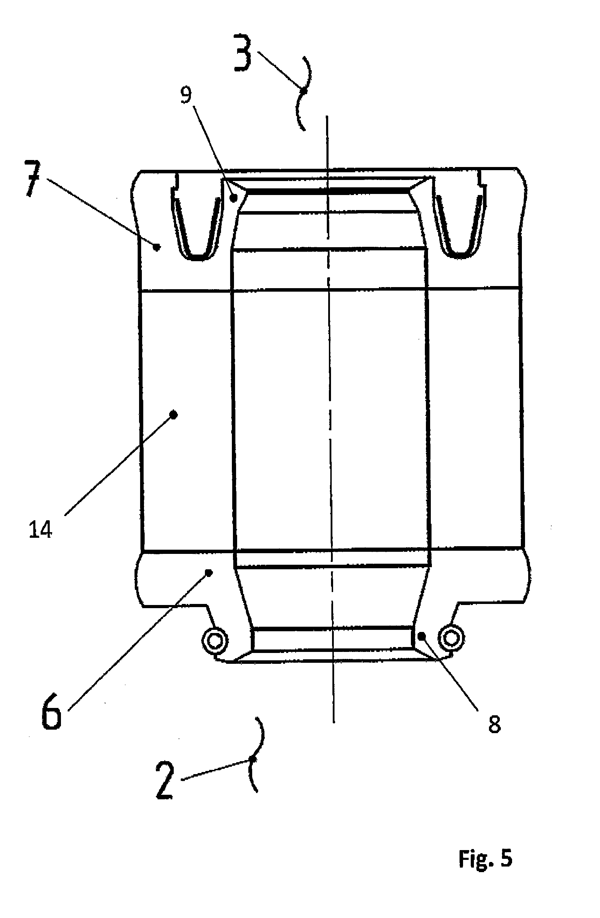

In Fig. 5 ist ein fünftes Ausführungsbeispiel gezeigt, das sich vom Ausführungsbeispiel aus Fig. 3 dadurch unterscheidet, dass die Dichtringe 6, 7 abweichend voneinander ausgebildet sind und jeweils aus einem Dichtungswerkstoff bestehen, der zur Abdichtung der abzudichtenden Medien 2, 3 besonders gut geeignet ist. Auf der Motorölseite gelangt im hier gezeigten Ausführungsbeispiel ein FKM-Werkstoff zur Anwendung, auf der Kraftstoffseite ein PTFE-Werkstoff.

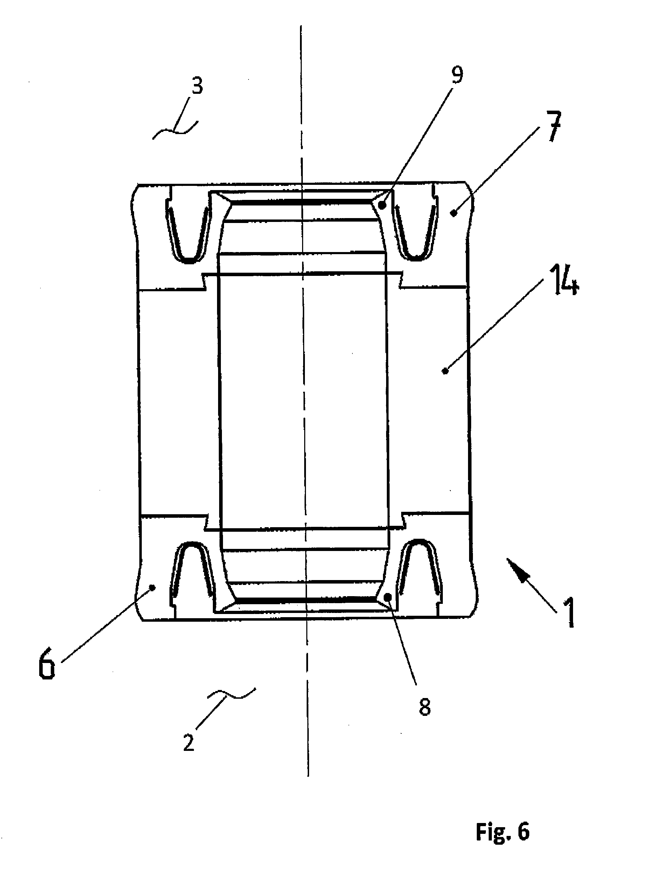

In Fig. 6 ist ein sechstes Ausführungsbeispiel gezeigt, bei dem die Dichtringe 6, 7 durch eine formschlüssige Verbindung, die schwalbenschwanzförmig ausgebildet ist, mit dem Distanzstück 14 verbunden sind.

Sollte die Haltekraft dieser formschlüssigen Verbindung nicht ausreichend sein, um die Doppeldichtung 1 während der bestimmungsgemäßen Verwendung der Dichtungsanordnung zusammen zu halten, besteht die Möglichkeit, zusätzlich eine stoffschlüssige Verbindung vorzusehen, zum Beispiel durch thermisches und/oder chemisches Fügen.

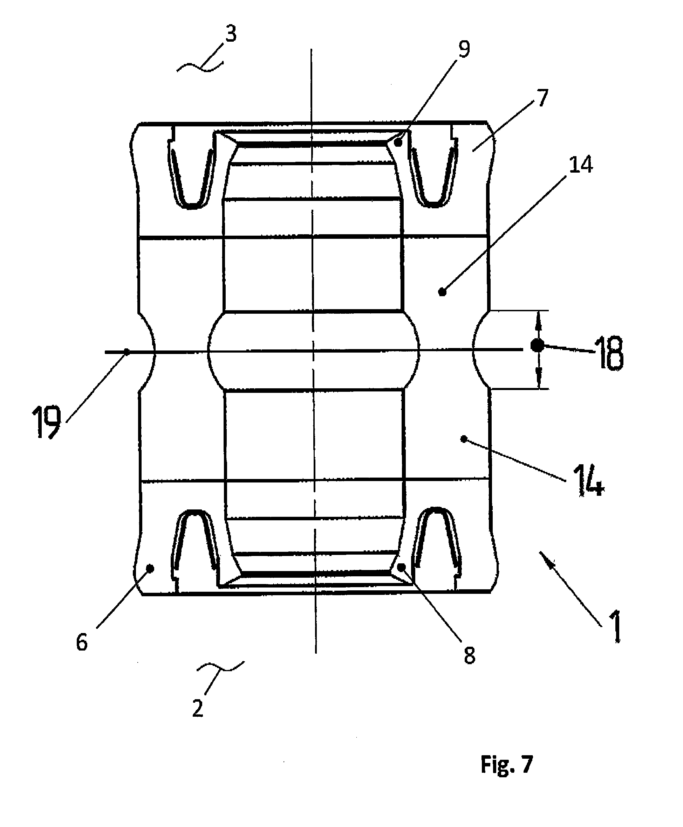

In Fig. 7 ist ein siebtes Ausführungsbeispiel der Dichtungsanordnung gezeigt, ähnlich dem dritten Ausführungsbeispiel aus Fig. 3, wobei das Distanzstück 14 einen in axialer Richtung elastisch nachgiebig ausgebildeten Teilbereich 18 aufweist. Dieser Teilbereich 18 ist axial mittig der Doppeldichtung 1 angeordnet und wird von der Radialebene 19 mittig durchschnitten. Dieser Teilbereich ist zur Kompensation zur Wärmeausdehnungen der Dichtungsanordnung in axialer Richtung vorgesehen, um unerwünscht große Verspannungen oder eine Anordnung der Doppeldichtung mit Spiel in der Dichtungsanordnung zu verhindern.

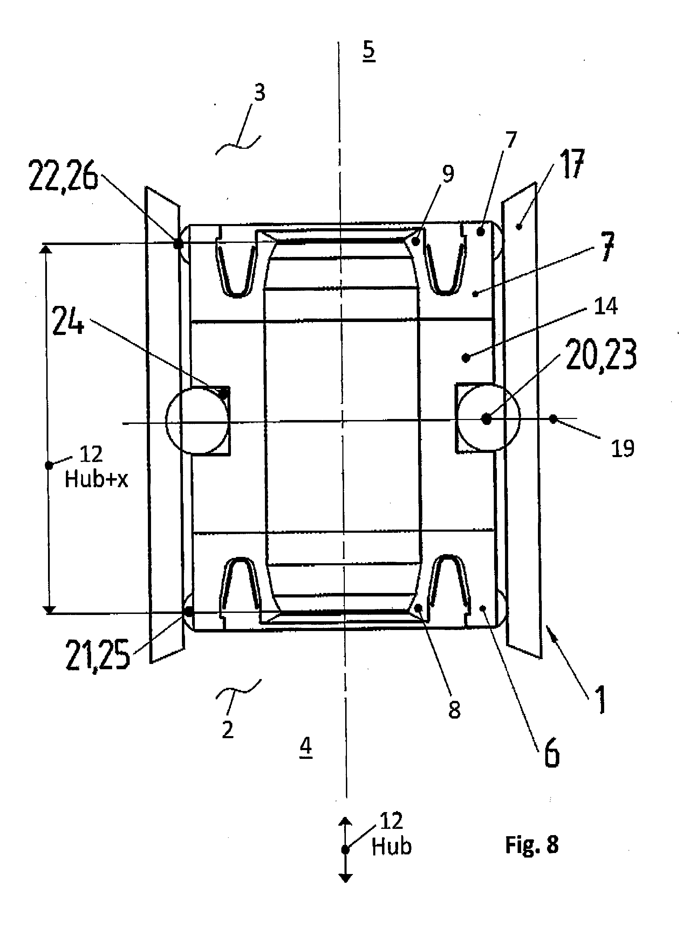

In Fig. 8 ist ein achtes Ausführungsbeispiel der erfindungsgemäßen Dichtungsanordnung gezeigt, das im Wesentlichen eine Kombination des dritten Ausführungsbeispiels aus Fig. 3 mit dem zweiten Ausführungsbeispiel aus Fig. 2 zeigt. Axial mittig der Doppeldichtung 1 ist die Ausnehmung 24 für den O-Ring 23 angeordnet, der gegenüber dem zweiten Maschinenelement 17 statisch abdichtet.

Im hier gezeigten Ausführungsbeispiel weist die Doppeldichtung 1 drei statisch beanspruchte Dichtungen 20, 21, 22 auf, die das zweite Maschinenelement 17 jeweils statisch dichtend berühren. Eine statische Dichtung 20 ist durch den O-Ring 23 gebildet, die beiden anderen statischen Dichtungen 21, 22 durch wulstförmige Verdickungen 25, 26, die Bestandteile der jeweiligen Dichtringe 6, 7 bilden.

## Patentansprüche

1. Dichtungsanordnung, umfassend eine Doppeldichtung (1) zur Abdichtung von zwei gegeneinander abzudichtenden, jeweils mit einem abzudichtenden Medium (2, 3) gefüllten Räumen (4, 5), wobei die Doppeldichtung (1) zwei Dichtringe (6, 7) umfasst, die stirnseitig beiderseits der Doppeldichtung (1) angeordnet sind, wobei jeder Dichtring (6, 7) zumindest eine dynamisch beanspruchte Dichtlippe (8, 9) aufweist, wobei die einander axial am nächsten benachbart zueinander angeordneten Dichtlippen (8, 9) von erstem Dichtring (6) und zweitem Dichtring (7) mit einem axialen Abstand (10) beabstandet zueinander angeordnet sind und wobei die Dichtlippen (6, 7) eine abzudichtende Oberfläche (11) eines mit einem Hub (12) translatorisch hin und her bewegbaren ersten Maschinenelements (13) dichtend berühren, **dadurch gekennzeichnet, dass** der axiale Abstand (10) zwischen den einander axial am nächsten benachbart zueinander angeordneten Dichtlippen (8, 9) von erstem Dichtring (6) und zweitem Dichtring (7) größer als der Hub (12) des ersten Maschinenelements (13) ist.

2. Dichtungsanordnung nach Anspruch 1, **dadurch gekennzeichnet, dass** das Verhältnis aus axialem Abstand (10) und Hub (13) zumindest 1,1 beträgt.

3. Dichtungsanordnung nach einem der Ansprüche 1 oder 2, **dadurch gekennzeichnet, dass** die Dichtringe (6, 7) der Doppeldichtung (1) einstückig ineinander übergehend ausgebildet sind.

4. Dichtungsanordnung nach einem der Ansprüche 1 oder 2, **dadurch gekennzeichnet, dass** die Doppeldichtung (1) ein axial zwischen den Dichtringen (6, 7) angeordnetes, separat erzeugtes und hohlzylinderförmig ausgebildetes Distanzstück (14) umfasst.

5. Dichtungsanordnung nach Anspruch 4, **dadurch gekennzeichnet, dass** das Distanzstück (14) die abzudichtende Obertläche (11) anliegend berührt und eine erste Führungsfläche (15) aufweist, die eine dem Distanzstück (14) radial zugewandte zweite Führungsfläche (16) eines zweiten Maschinenelements (17), das dem ersten Maschinenelement (13) mit radialem Abstand benachbart zugeordnet ist, anliegend berührt.

6. Dichtungsanordnung nach einem der Ansprüche 4 oder 5, **dadurch gekennzeichnet, dass** das Distanzstück (14) aus einem polymeren Werkstoff besteht.

7. Dichtungsanordnung nach einem der Ansprüche 4 bis 6, **dadurch gekennzeichnet, dass** das Distanzstück (14) einen in axialer Richtung elastisch nachgiebig ausgebildeten Teilbereich (18) aufweist.

8. Dichtungsanordnung nach einem der Ansprüche 4 bis 7, **dadurch gekennzeichnet, dass** das Distanzstück (14) und die Dichtringe (6, 7) kraft- und/oder formschlüssig miteinander verbunden sind.

9. Dichtungsanordnung nach einem der Ansprüche 4 bis 7, **dadurch gekennzeichnet, dass** das Distanzstück (14) und die Dichtringe (6, 7) stoffschlüssig miteinander verbunden sind.

10. Dichtungsanordnung nach einem der Ansprüche 3 bis 9, **dadurch gekennzeichnet, dass** die Dichtringe (6, 7) als Gleichteile ausgebildet sind und dass die Dichtringe (6, 7) spiegelbildlich zu einer axial mittig der Doppeldichtung (1) angeordneten, gedachten Radialebene (19) ausgebildet sind.

11. Dichtungsanordnung nach einem der Ansprüche 3 bis 9, **dadurch gekennzeichnet, dass** die Dichtringe (6, 7) voneinander abweichend ausgebildet sind und/oder aus voneinander abweichenden Werkstoffen bestehen.

12. Dichtungsanordnung nach einem der Ansprüche 1 bis 11, **dadurch gekennzeichnet, dass** die Doppeldichtung (1) zumindest eine statisch beanspruchte Dichtung (20, 21, 22) aufweist, die das zweite Maschinenelement (17) dichtend berührt.

13. Dichtungsanordnung nach Anspruch 12, **dadurch gekennzeichnet, dass** die statische Dichtung (20) durch einen O-Ring (23) gebildet ist.

14. Dichtungsanordnung nach Anspruch 13, **dadurch gekennzeichnet, dass** der O-Ring (23) in einer radial in Richtung des zweiten Maschinenelements (17) offenen Ausnehmung (24) der Doppeldichtung (1) angeordnet ist.

15. Dichtungsanordnung nach einem der Ansprüche 1 bis 14, **dadurch gekennzeichnet, dass** jeder Dichtring (6, 7) auf der dem zweiten Maschinenelement (17) radial zugewandten Seite eine als wulstförmige Verdickung (25, 26) ausgebildete, statisch beanspruchte Dichtung (21, 22) aufweist.

16. Dichtungsanordnung nach einem der Ansprüche 1 bis 15, **dadurch gekennzeichnet, dass** das erste Maschinenelement (13) durch eine Kolbenstange (27) und das zweite Maschinenelement (17) durch ein das erste Maschinenelement (13) mit radialem Abstand umschließendes 5 Gehäuse (28) gebildet ist.

17. Verwendung einer Dichtungsanordnung nach einem der Ansprüche 1 bis 16 in einer Kraftstoffkolbenpumpe, wobei einer der abzudichtenden Räume (4, 5) mit Kraftstoff und der andere der abzudichtenden Räume (5, 10 4) mit Öl gefüllt ist.
